# EUROPÄISCHE PATENTSCHRIFT

(11) **EP 0 798 836 B1**
(45) Veröffentlichungstag und Bekanntmachung des Hinweises auf die Patenterteilung: **22.08.2001**
(21) Anmeldenummer: 97250100.1
(22) Anmeldetag: 25.03.1997
(51) Int. Cl.: H02B 13/035, H01H 31/00

(54) **Vorrichtung zur Zusatzerdung von Schaltkontakten in Mittelspannungs-Schaltanlagen**
Device for supplementary grounding of switch contacts in medium voltage switch gear
Dispositif pour la mise à terre supplémentaire des contacts des commutateurs dans des installations de commutation à moyenne tension

(30) Priorität: 28.03.1996 DE 29606320 U
(43) Veröffentlichungstag der Anmeldung: 01.10.1997
(73) Patentinhaber: SIEMENS AKTIENGESELLSCHAFT, 80333 München (DE)
(72) Erfinder: Werner, Peter, 61440 Oberursel (DE); Hermeler, Wilma, 63477 Maintal (DE); Betzmann, Martin, 61273 Wehrheim (DE)

(56) Entgegenhaltungen:
- EP-A- 0 564 057
- EP-A- 0 633 587
- CH-A- 524 237
- DE-C- 440 710
- DE-C- 666 199

## Beschreibung

Die Erfindung betrifft eine Vorrichtung zur Zusatzerdung von Schaltkontakten in Mittelspannungs-Schaltanlagen, insbesondere von Dreistellungsschaltern, bei denen ein Koppelantrieb ein drehbares Schaltmesser innerhalb einer Schaltkammer derart bewegt, daß das Schaltmesser bei einer Hubauslenkung aus einer neutralen Lage in eine Vorzugsrichtung einen ersten und einen zweiten Schaltkontakt elektrisch leitend miteinander verbindet, und daß das Schaltmesser bei der Hubauslenkung aus der neutralen Lage in eine der Vorzugsrichtung entgegengesetzten Richtung einen Erdkontakt mit einem dritten Schaltkontakt verbindet.

Derartige Vorrichtungen werden in der Regel als Zusatzausstattungen bedarfsweise als zusätzliche Sicherungsmaßnamen in Mittelspannungs-Schaltanlagen eingebaut. Dementsprechend ist die konstruktive Ausgestaltung derartiger Vorrichtungen in vielfältiger Weise an die vorhandenen konstruktiven Gegebenheiten anzupassen. Die Zusatzerder weisen dadurch dem Grad der Anpassung entsprechen sehr unterschiedliche Konstruktionselemente auf. Die funktionsbedingten Schaltfolgen sind also durch relativ komplexe Dreh- und Schaltgestänge von den vorhandenen Betriebsmitteln abzuleiten bzw. durch relativ aufwendige Zusatzkonstruktionen zu realisieren.
Die der Erfindung zugrunde liegende Aufgabe besteht darin, den Grad der Anpassung derartiger Vorrichtungen an die Steuerung der Schaltkontakte bzw. an die Dreistellungsschalter, so zu optimieren, daß die Zusatzerdung mit geringstem materiellen Aufwand unter weitestgehender Verwendung vorhandener Steuerungselemente realisiert ist, ohne jedoch Einschränkungen hinsichtlich des hohen Sicherheitsstandards hinnehmen zu müssen.

Erfindungsgemäß wird dies durch die Merkmale
1.1 das Schaltmesser ist im Umfangsbereich der Drehkraftübertragung des Koppelantriebes zu diesem diametral gegenüberliegend angreifenden Zusatzerderantrieb verbunden,
1.2 der Zusatzerderantrieb ist durch eine Koppelstange realisiert, die mit einem Drehhebel gelenkig verbunden ist,
1.3 der Drehhebel weist an einem freien Ende einen Zusatzerderkontakt auf,
1.4 der Erderkontakt ist mit einem Drehlagergehäuse elektrisch leitend verbunden, in dem der Drehhebel drehgelagert angeordnet ist,
1.5 der Drehhebel ist mit dem Zusatzerderantrieb derart steuerbar, daß mit der Bewegung des Schaltmessers von der neutralen Lage in die der Vorzugsrichtung entgegengesetzten Richtung der Zusatzerderkontakt mit dem zweiten Schaltkontakt elektrisch leitend verbunden ist, erreicht.

Mit dem Zusatzerderantrieb, der als Koppelstange ausgebildet direkt mit dem vom Koppelantrieb steuerbaren Schaltmesser in Verbindung steht, ist erreicht, daß das mit dem Drehhebel verbundene Erdpotential durch eine sehr geringe Schwenkbewegung des Drehhebels über den Zusatzerderkontakt direkt auf den zusätzlich zu erdenden Schaltkontakt übertragbar ist. Damit sind sehr geringe Kraftübertragungen aufzuwenden, so daß die Koppelstange des Zusatzerderantriebs entsprechend dimensioniert sein kann. Der Erdkontakt, an dem der Drehhebel drehgelagert ist, dient also gleichzeitig als Zusatzerder. In diesem Zusammenhang ist es auch denkbar, bei mehrpoligen Ausführungen die Drehhebel über eine gemeinsame Steuerungswelle zu betätigen, um eine synchrone Schaltfolge zu ermöglichen. Diese Vorrichtung zur Zusatzerdung von Schaltkontakten ist praktisch voll integriert im Dreistellungsschalter. Wegen der einfachen Bedienungsmittel können auch andere Schaltkontaktsteuerungen zur Realisierung derartiger Zusatzerdungen entsprechend eingesetzt werden.

Gemäß einer vorteilhaften Ausgestaltung der Erfindung sind die Merkmale
2.1 die Hubrichtung des Koppelantriebs und die Hubrichtung des Zusatzerderantriebs wirken in der neutralen Lage des Schaltmessers annähernd parallel in gleicher Drehrichtung auf das Schaltmesser ein,
2.2 der Koppelantrieb und der Zusatzerderantrieb sind vom Drehpunkt des Schaltmessers (SM) gleichweit entfernt, vorgesehen. Mit der parallelen Kraftübertragung ist eine optimale Kraftübertragung zur Steuerung des Drehhebels erreicht.

Die Erfindung wird durch ein figürlich dargestelltes Ausführungsbeispiel näher erläutert, wobei die Vorrichtung zur Zusatzerdung schematisch vereinfacht dargestellt ist.

Im Ausführungsbeispiel ist als Schaltkontakt ein Dreistellungsschalter gezeigt, der im wesentlichen aus der Schaltkammer SK, den drei Schaltkontakten SK1, SK2 und SK3 sowie dem Erdkontakt EK und dem beweglichen Schaltmesser SM besteht. Das Schaltmesser SM ist mit dem Koppelantrieb verbunden, der mittels einer nicht bezeichneten Schiebestange das Schaltmesser SM durch eine in Pfeilrichtung angedeutete Hubbewegung derartig bewegt, daß in der einen Schaltstellung der erste und der zweite Schaltkontakt SK1 und SK2 elektrisch leitend miteinander verbunden sind, und in der anderen Schaltstellung der Erdkontakt EK mit dem dritten Schaltkontakt SK3 elektrisch eine Einheit bilden.
Das Schaltmesser SM des Dreistellungsschalters ist darüber hinaus mit der Koppelstange KS des Zusatzerderantriebs ZA gelenkig verbunden. Der Zusatzerderantrieb ZA weist den Drehhebel DH mit seinem Zusatzerderkontakt ZK , wobei der Drehhebel DH mit dem Zusatzerderantrieb ZA gleichermaßen gelenkig gekoppelt ist. Der Drehhebel DH ist an dem ortsfest mit dem Erdkontakt elektrisch leitend verbundenen Drehlagergehäuse DG drehgelagert, so daß mit der von dem Koppelantrieb ausgelösten Hubbewegung über die Koppelstange KS des Zusatzerderantriebs ZA der Zusatzerderkontakt in der mit der Pfeilrichtung angedeuteten Schwenkbewegung ausgelenkt wird. Sobald das Schaltmesser SM das Erdpotential des Erdkontakts EK auf den dritten Schaltkontakt überträgt, wird auch der zweite Schaltkontakt SK2 über der Zusatzerderkontakt ZK mit Erdpotential verbunden. Wird das Schaltmesser SM in die neutrale Schaltstellung, das Schaltmesser SM ist mit keinem Schaltkontakt verbunden, zurückgeführt, so wird auch der Zusatzerderkontakt ZK aus dem Bereich des zweiten Schaltkontaktes SK2 herausbewegt und die Zusatzerderverbindung getrennt. Dieser Trennzustand bleibt auch dann erhalten, wenn der Koppelantrieb KA das Schaltmesser SM zum ersten Schaltkontakt SK1 bewegt und damit die elektrische Verbindung zum zweiten Schaltkontakt SK2 hergestellt ist. Der Drehhebel DH wird mit seinem Zusatzerderkontakt ZK lediglich von dem zweiten Schaltkontakt SK2 in Pfeilrichtung weggeschwenkt.

Der Einsatz dieser Vorrichtung zur Zusatzerdung erstreckt sich aber nicht nur auf die Anwendung von Dreistellungsschaltern, sondern kann auch im Zusammenhang mit anderen Schaltkontakten in Verbindung mit zentral angeordneten drehbaren Schaltmessern innerhalb von Mittelspannungs-Schaltanlagen eingesetzt werden.

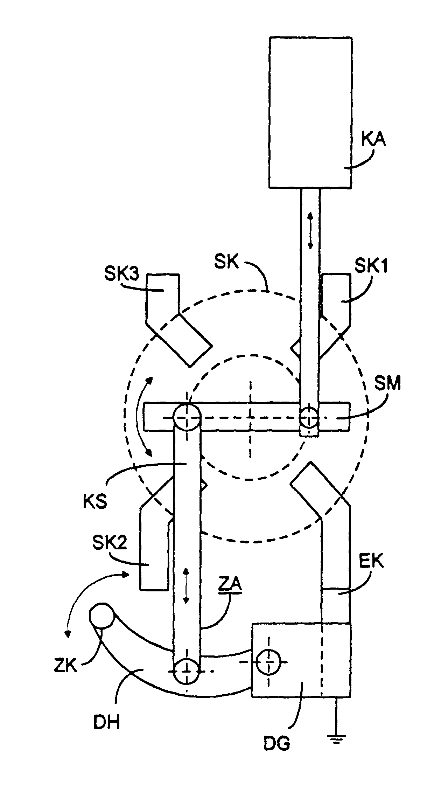

## Patentansprüche

1. Vorrichtung zur Zusatzerdung von Schaltkontakten in Mittelspannungs-Schaltanlagen, insbesondere von Dreistellungsschaltern, bei denen ein Koppelantrieb (KA) ein drehbares Schaltmesser (SM) innerhalb einer Schaltkammer (SK) derart bewegt, daß das Schaltmesser (SM) bei einer Hubauslenkung aus einer neutralen Lage in eine Vorzugsrichtung einen ersten (SK1) und einen zweiten (SK2) Schaltkontakt elektrisch leitend miteinander verbindet, und daß das Schaltmesser (SM) bei der Hubauslenkung aus der neutralen Lage in eine der Vorzugsrichtung entgegengesetzten Richtung einen Erdkontakt (EK) mit einem dritten Schaltkontakt (SK3) verbindet,
**gekennzeichnet durch** die Merkmale
1.1 das Schaltmesser (SM) ist im Umfangsbereich der Drehkraftübertragung des Koppelantriebes (KA) zu diesem diametral gegenüberliegend angreifenden Zusatzerderantrieb (ZA) verbunden,
1.2 der Zusatzerderantrieb (ZA) ist durch eine Koppelstange(KS) realisiert, die mit einem Drehhebel (DH) gelenkig verbunden ist,
1.3 der Drehhebel (DH)weist an einem freien Ende einen Zusatzerderkontakt (ZK) auf,
1.4 der Erderkontakt (EK) ist mit einem Drehlagergehäuse (DG) elektrisch leitend verbunden, in dem der Drehhebel(DH) drehgelagert angeordnet ist,
1.5 der Drehhebel (DH) ist mit dem Zusatzerderantrieb (ZA) derart steuerbar, daß mit der Bewegung des Schaltmessers (SM) von der neutralen Lage in die der Vorzugsrichtung entgegengesetzten Richtung der Zusatzerderkontakt (ZK) mit dem zweiten Schaltkontakt (SK2) elektrisch leitend verbunden ist.

2. Vorrichtung zur Zusatzerdung von Schaltkontakten nach Anspruch 1,
**gekennzeichnet durch** die Merkmale
2.1 die Hubrichtung des Koppelantriebs (KA) und die Hubrichtung des Zusatzerderantriebs (ZA) wirken in der neutralen Lage des Schaltmessers (SM) annähernd parallel in gleicher Drehrichtung auf das Schaltmesser (SM)ein,
2.2 der Koppelantrieb (KA) und der Zusatzerderantrieb (ZA) sind vom Drehpunkt des Schaltmessers (SM) gleichweit entfernt.

## Claims

1. Apparatus for additional earthing of switching contacts in medium-voltage switchgear assemblies, in particular of three-position switches, in which a coupling drive (KA) moves a rotating switchblade (SM) within a switching chamber (SK) in such a manner that the switchblade (SM) electrically conductively connects a first switching contact (SK1) and a second switching contact (SK2) to one another during a first movement deflection from a neutral position in a preferred direction, and in such a manner that the switchblade (SM) connects an earthing contact (EK) to a third switching contact (SK3) during the movement deflection from the neutral position in a direction opposite to the preferred direction, characterized by the following features:
1.1 The switchblade (SM) is connected, in the circumferential region of the rotating-power transmission of the coupling drive (KA), to this additional earthing-device drive (ZA) which acts diametrically opposite,
1.2 The additional earthing-device drive (ZA) is provided by a coupling rod (KS) which is connected in a hinged manner to a rotating lever (DH),
1.3 At one free end, the rotating lever (DH) has an additional earthing-device contact (ZK),
1.4 The earthing-device contact (EK) is electrically conductively connected to a rotating-bearing housing (DG) in which the rotating lever (DH) is mounted such that it can rotate,
1.5 The rotating lever (DH) can be controlled by the additional earthing-device drive (ZA) in such a way that the movement of the switchblade (SM) from the neutral position in the direction opposite to the preferred direction results in the additional earthing-device contact (ZK) being electrically conductively connected to the second switching contact (SK2).

2. Apparatus for additional earthing of switching contacts according to Claim 1,
characterized by the following features:
2.1 The movement direction of the coupling drive (KA) and the movement direction of the additional earthing-device drive (ZA) act on the switchblade (SM), approximately parallel and in the same rotation direction, when the switchblade (SM) is in the neutral position,
2.2 The coupling drive (KA) and the additional earthing-device drive (ZA) are at equal distances away from the rotation point of the switchblade (SM).

## Revendications

1. Dispositif de mise à la terre supplémentaire de contacts de commutation dans des installations de commutation à moyenne tension, notamment d'interrupteurs à trois positions, dans lesquels un dispositif (KA) de couplage déplace un couteau (SM) de commutation tournant à l'intérieur d'une chambre (SK) de commutation de telle manière que le couteau (SM) de commutation, lors d'une déviation de course à l'extérieur d'une zone neutre dans un sens préféré, relie l'un à l'autre de manière conductrice de l'électricité un premier contact (SK1) de commutation et un deuxième contact (SK2) de commutation, et de telle manière que le couteau (SM) de commutation, lors de la déviation de course à l'extérieur de la position neutre dans un sens opposé au sens préféré, relie un contact (EK) de mise à la terre à un troisième contact (SK3) de commutation,
caractérisé par les dispositions
1.1 le couteau (SM) de commutation est relié dans la zone périphérique de la transmission de force de rotation du dispositif (KA) d'entraînement de couplage au dispositif (ZA) d'entraînement de dispositif de mise à la terre attaquant de façon diamétralement opposée au dispositif (KA) d'entraînement de couplage,
1.2 le dispositif (ZA) d'entraînement de dispositif de mise à la terre supplémentaire est réalisé par une tige (KS) de couplage qui est articulée à un levier (DH) rotatif,
1.3 le levier (DH) rotatif comporte à une extrémité libre un contact (ZK) de dispositif de mise à la terre supplémentaire,
1.4 le contact (EK) de dispositif de mise à la terre est relié de manière conductrice de l'électricité à un carter (DG) de palier de pivotement dans lequel le levier (DH) rotatif est monté tournant,
1.5 le levier (DH) rotatif peut être commandé par le dispositif (ZA) d'entraînement de dispositif de mise à la terre supplémentaire de telle manière que, par le déplacement du couteau (SM) de commutation de la position neutre dans le sens opposé au sens préféré, le contact (ZK) de dispositif de mise à la terre supplémentaire est relié de manière conductrice de l'électricité au deuxième contact (SK2) de commutation.

2. Dispositif de mise à la terre supplémentaire de contacts de commutation suivant la revendication 1, caractérisé par les dispositions
2.1 la direction de course du dispositif (KA) d'entraînement de couplage et la direction de course du dispositif (ZA) d'entraînement de dispositif de mise à la terre supplémentaire agissent en la position neutre du couteau (SM) de commutation à peu près parallèlement dans le même sens de rotation sur le couteau (SM) de commutation,
2.2 le dispositif (KA) d'entraînement de couplage et le dispositif (ZA) d'entraînement de dispositif de mise à la terre supplémentaire sont éloignés de la même distance du centre de rotation du couteau (SM) de commutation.
